# EUROPEAN PATENT APPLICATION

(11) **EP 4 184 027 A1**
(43) Date of publication of application: **24.05.2023**
(21) Application number: 22207953.5
(22) Date of filing: 17.11.2022
(51) Int. Cl.: F16C 23/04, F16C 31/02, F16C 33/04, F16C 33/10, F16C 33/20, F16C 33/28, F16C 11/06

(54) **SELF-LUBRICATING BEARING**

(30) Priority: 17.11.2021 US 202163280189 P
(71) Applicant: Schaublin SA, 2800 Delémont (CH)
(72) Inventor: POLANCO, Moises, Jura (CH); COOMBE, David, Somerset (GB)
(74) Representative: Bjerkén Hynell KB

(57) **Abstract**

A self-lubricating bearing (10) includes a metallic outer ring (12) having a concave inside surface (16) that defines an interior area (14) of the outer ring (12). The bearing (10) includes an inner member (20) having a convex exterior surface (22). The inner member (20) is disposed in the interior area (14), and the convex exterior surface (22) has a physical vapor deposition coating (24) thereon. A self-lubricating liner (30) is bonded to the concave inside surface (16). The outer ring (12) and the inner member (20) are made from a stainless steel or a corrosion-resistant superalloy.

## Description

### CROSS-REFERENCE TO RELATED APPLICATION

This application is a non-provisional application of, and claims priority to U.S. Provisional Patent Application No. 63/280,189, entitled "Self-Lubrication Bearing," filed on November 17, 2021, the entire contents of which are incorporated herein by reference in their entirety.

### FIELD OF THE TECHNOLOGY

The present technology is directed to a self-lubricating bearing and more particularly to a self-lubricating bearing having a metallic outer ring, a self-lubricating liner, and a metallic inner member with a physical vapor deposition coating thereon. The self-lubricating liner is bonded to the outer ring. Optionally, a lubricant is disposed between the self-lubricating liner and the physical vapor deposition coating.

### BACKGROUND

Various types of bearings are used in aircraft applications where vibrations are known to occur due to bearing wear. When vibration of the aircraft airframe occurs, it can be detected by the persons inside the aircraft. Depending on the root cause of the vibration, it may be experienced either as physical movement, noise, or both movement and noise. These occurrences can cause passenger distress and malaise. Furthermore, any vibration can cause increased wear of components. As the airframe vibration increases, it causes premature failure of the bearings. Options for replacement of the failed bearing is limited because of space constraints. Thus, there is a need for a bearing that is resistant to wear.

In addition, there are environmental standards that limit the use of certain materials in components such as bearings. For example, REACH (i.e., Registration, Evaluation, Authorization and Restriction of Chemicals) is a regulation of the European Union adopted to improve the protection of human health and the environment from the risks that can be posed by chemicals while enhancing the competitiveness of the EU chemicals industry. Thus, certain materials must be avoided in the design of bearings.

### SUMMARY

There is disclosed herein a self-lubricating bearing that includes an outer ring having a concave inside surface defining an interior area of the outer ring. The self-lubricating bearing has an inner member having a convex exterior surface. The inner member is disposed at least partially in the interior area. The convex exterior surface has a physical vapor deposition coating thereon. The self-lubricating bearing has a self-lubricating liner bonded to the concave inside surface. The outer ring comprises a first metallic alloy, and the inner member comprises a second metallic alloy.

In some embodiments, a chemical composition of the first metallic alloy and a chemical composition of the second metallic alloy are the same.

In some embodiments, the chemical composition includes a precipitation hardened stainless steel.

In some embodiments, the precipitation hardened stainless steel includes an AMS 5643 17-4PH stainless steel or an AMS 5629 13-8 PH stainless steel.

In some embodiments, the precipitation hardened stainless steel includes an AMS 5643 17-4PH stainless steel heat treated per 17-4PH HI 150.

In some embodiments, the chemical composition includes a martensitic stainless steel.

In some embodiments, the martensitic stainless steel includes a 440C stainless steel or an AMS 5630, AMS 5880 or AMS 5618 stainless steel.

In some embodiments, the martensitic stainless steel is heat treated to HRc 55 to 62.

In some embodiments, a chemical composition of the first metallic alloy includes a precipitation hardened stainless steel, and a chemical composition of the second metallic alloy includes a martensitic stainless steel.

In some embodiments, the precipitation hardened stainless steel includes an AMS 5643 17-4PH stainless steel or an AMS 5629 13-8 PH stainless steel, and the martensitic stainless steel comprises a 440C stainless steel or an AMS 5630, AMS 5880 or AMS 5618 stainless steel.

In some embodiments, the precipitation hardened stainless steel includes an AMS 5643 17-4PH stainless steel heat treated per 17-4PH H1150.

In some embodiments, the martensitic stainless steel is heat treated to HRc 55 to 62.

In some embodiments, the self-lubricating bearing further includes a lubricant disposed between the self-lubricating liner and the physical vapor deposition coating.

In some embodiments, the lubricant includes a silicone grease with a plurality of first self-lubricating particles dispersed therein.

In some embodiments, the physical vapor deposition coating includes chromium nitride, titanium nitride, tungsten carbide or zirconium nitride.

In some embodiments, the physical vapor deposition coating is coated on the convex exterior surface via at least one of cathode arc evaporation, magnetron sputter, electron beam evaporation, ion beam sputter, and laser ablation.

In some embodiments, the plurality of first self-lubricating particles includes polytetrafluoroethylene.

In some embodiments, the polytetrafluoroethylene includes at least one of a powder, a floc and fibers.

In some embodiments, the self-lubricating liner includes a woven material with a thermosetting resin embedded therein and a plurality of second self-lubricating particles dispersed in the resin.

In some embodiments, the woven material includes a fabric comprising at least one of fiberglass, polyethylene terephthalate, polyester, nylon, cotton, meta-aramid material, polytetrafluoroethylene and aromatic polyamide fibers.

In some embodiments, the self-lubricating liner includes a thermally-consolidated, machinable, moldable non-woven material.

In some embodiments, the non-woven material includes a plurality of second self-lubricating particles integral to the non-woven material or as an additive to a resin.

In some embodiments, the resin includes polyester, epoxy, phenolic, urethane, polyimide, thermoplastic polymers or a thermoset polymer.

In some embodiments, the self-lubricating bearing is a spherical bearing or a journal bearing.

In some embodiments, the outer ring has at least one axial split therein.

In some embodiments, the inner member has at least one axial split therein.

In some embodiments, the self-lubricating bearing has a diametral clearance between the inner member and the physical vapor deposition coating of less than 0.1 mm after 30,000,000 cycles of operation.

In some embodiments, the inner member has a cylindrical bore extending axially therethrough, the bore is defined by a concave interior surface having another self-lubricating liner adhered thereto, the self-lubricating bearing further includes a shaft extending through the bore and another physical vapor deposition coating on a cylindrical exterior surface of the shaft, and the shaft is in sliding relation to the inner member.

In some embodiments, the self-lubricating bearing further includes a lubricant disposed between the other self-lubricating liner and the other physical vapor deposition coating.

In some embodiments, the other physical vapor deposition coating includes chromium nitride, titanium nitride, tungsten carbide or zirconium nitride.

In some embodiments, the other physical vapor deposition coating is coated on the cylindrical exterior surface via at least one of cathode arc evaporation, magnetron sputter, electron beam evaporation, ion beam sputter, and laser ablation.

### BRIEF DESCRIPTION OF THE DRAWINGS

FIG. 1A is a cross-sectional view of a self-lubricating spherical bearing according to an embodiment of the present invention;
FIG. 1B is an enlarged view of Detail 1B of FIG. 1A;
FIG. 1C is a cross-sectional view of a self-lubricating spherical bearing according to another embodiment of the present invention;
FIG. 2 is a cross-sectional view of a self-lubricating journal bearing according to another embodiment of the present invention;
FIG. 3A is a schematic view of the self-lubricating liner of the bearing;
FIG. 3B is a schematic view of the silicone grease employed in some embodiments of the present invention;
FIG. 4 is a graph with plots of endurance test results for the self-lubricating bearing according to an embodiment of the present invention and a prior art bearing;
FIG. 5A is a cross-sectional view of the self-lubricating spherical bearing of FIG. 1A taken across Section 5-5 and showing diametral clearance; and
FIG. 5B is a cross-sectional view of the self-lubricating spherical bearing according to another embodiment.

### DETAILED DESCRIPTION

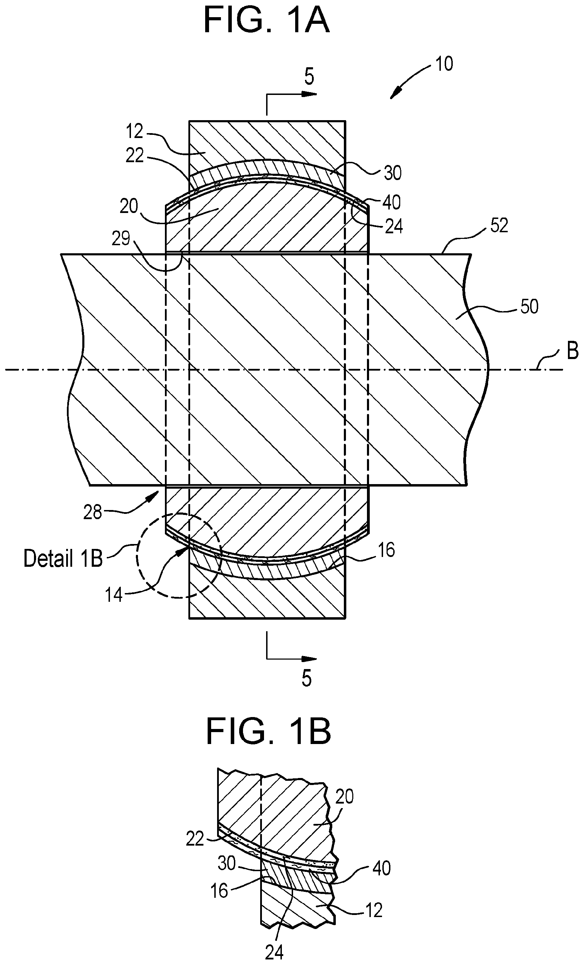

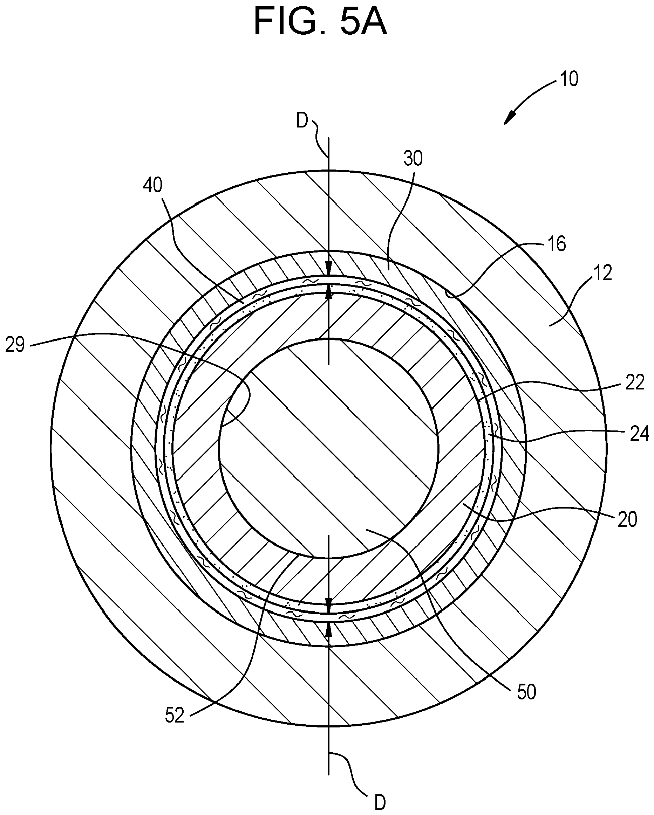

As shown in FIGS. 1A, 1B, and 5A, a self-lubricating bearing is generally designated by the numeral 10. For example, the self-lubricating bearing 10 illustrated in FIG. 1A is a spherical bearing. The self-lubricating bearing 10 has utility in aerospace applications, for example, in flight control surfaces including primary flight control surfaces (e.g., ailerons, elevator, rudder), and secondary (i.e., auxiliary) flight control surfaces (e.g., flaps, spoilers, leading edge devices, high lift systems). The self-lubricating bearing 10 also has utility in applications where there are vibration and dithering motions, such as but not limited to railway applications, anti-roll bars and damper bearings. The self-lubricating bearing 10 also has utility in applications in drones/helicopters which contain pitch link bearings and tail rotor link bearings. The self-lubricating bearing 10 also has utility in applications in motorsports which contain linkages and suspension bearings.

The self-lubricating bearing 10 includes an outer ring 12 having an interior area 14 defined by a concave inside surface 16 of the outer ring 12. The outer ring 12 is manufactured from a stainless steel (e.g., martensitic steel, ferritic steel, precipitation hardened steel, austenitic steel, austenitic-ferritic steel), corrosion-resistant superalloy (e.g., nickel based, cobalt based, iron based), or titanium-based alloys. In some embodiments, the stainless steel is a precipitation hardened stainless steel and is an AMS 5643 17-4PH stainless steel or an AMS 5629 13-8 PH stainless steel. In some embodiments, the AMS 5643 17-4PH stainless steel is heat treated per 17-4PH HI 150.

The self-lubricating bearing 10 includes an inner member 20 having a convex exterior surface 22. The inner member 20 is disposed at least partially in the interior area 14. The inner member 20 is manufactured from a stainless steel (e.g., martensitic steel, ferritic steel, precipitation hardened steel, austenitic steel, austenitic-ferritic steel), corrosion-resistant superalloy (e.g., nickel based, cobalt based, iron based), or titanium-based alloys. In some embodiments, the stainless steel is a precipitation hardened stainless steel such as AMS 5629 13-8 PH stainless steel or a martensitic steel per AMS5630, AMS5880, or AMS5618. In some embodiments, the martensitic steel per AMS5630, AMS5880 or AMS5618 is heat treated to HRc 55 to 62. The convex exterior surface 22 has a physical vapor deposition coating 24 thereon (see FIG. 1B).

In some embodiments, the outer ring 12 is made from a first metallic alloy and the inner member 20 is made from a second metallic alloy. In some embodiments, the chemical composition of the first metallic alloy and the chemical composition of the second metallic alloy are the same. In some embodiments, the chemical composition of the first metallic alloy and the second metallic alloy consist of a precipitation hardened stainless steel. The precipitation hardened stainless steel is, for example, an AMS 5643 17-4PH stainless steel or an AMS 5629 13-8 PH stainless steel. In some embodiments, the precipitation hardened stainless steel is, for example, an AMS 5643 17-4PH stainless steel heat treated per 17-4PH HI 150. In some embodiments, the chemical composition of the first metallic alloy and of the second metallic alloy is a martensitic stainless steel such as 440C stainless steel (e.g., having a composition of 78 - 83.1% iron, 16 - 18% chromium, 1 - 1.2% carbon, 1% (max) silicon, 1% (max) manganese, 0.8% molybdenum, 0.04% phosphorus and 0.02% sulfur).

In some embodiments, where the chemical composition of the first metallic alloy and the second metallic alloy are the same, the chemical composition of the first metallic alloy and the second metallic alloy is, for example, a martensitic stainless steel. The martensitic stainless steel is a 440C stainless steel or an AMS 5630, AMS 5880 or AMS 5618 stainless steel. In some embodiments, the martensitic stainless steel is heat treated to HRc 55 to 62.

In some embodiments, the chemical composition of the first metallic alloy and the chemical composition of the second metallic alloy are different. For example, the chemical composition of the first metallic alloy is a precipitation hardened stainless steel and the chemical composition of the second metallic alloy is a martensitic stainless steel. In some embodiments, the precipitation hardened stainless steel is an AMS 5643 17-4PH stainless steel or an AMS 5629 13-8 PH stainless steel and the martensitic stainless steel is an AMS 5630, AMS 5880 or AMS 5618 stainless steel. In some embodiments, the precipitation hardened stainless steel is 440C stainless steel or an AMS 5643 17-4PH stainless steel heat treated per 17-4PH HI 150. In some embodiments, the martensitic stainless steel is heat treated to HRc 55 to 62.

A self-lubricating liner 30 is bonded to the concave inside surface 16. In some embodiments, the physical vapor deposition coating 24 is a chromium nitride material. In some embodiments, the physical vapor deposition coating 24 is a titanium nitride material. In some embodiments, the physical vapor deposition coating 24 is a tungsten carbide material. In some embodiments, the physical vapor deposition coating 24 is a zirconium nitride material. The physical vapor deposition coating 24 is performed via cathode arc evaporation, magnetron sputter, electron beam evaporation, ion beam sputter or laser ablation.

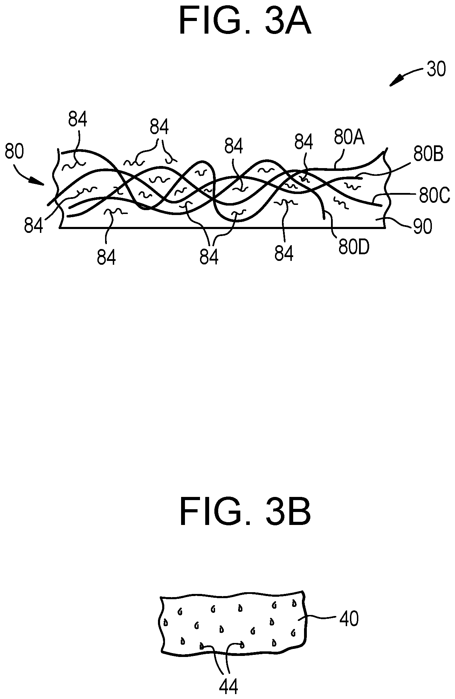

In some embodiments, a lubricant 40 (e.g., silicone grease) with a plurality of first self-lubricating particles 44 (see FIG. 3B) dispersed therein is disposed between the self-lubricating liner 30 and the physical vapor deposition coating 24. In some embodiments, the plurality of first self-lubricating particles 44 are made of polytetrafluoroethylene (PTFE) material such as but not limited to a powder, a floc and fibers. The physical vapor deposition coating 24, self-lubricating liner 30, and lubricant 40 facilitate relative rotational or translational movement between the inner member 20 and the outer ring 12.

In some embodiments, the inner member 20 has a cylindrical bore 28 extending axially therethrough and concentric with a longitudinal axis B of the self-lubricating bearing 10. The bore 28 is defined by a concave interior surface 29 of the inner member 20. In some embodiments, a shaft 50 extends through the bore 28 and a cylindrical exterior surface 52 of the shaft 50 engages the concave interior surface 29 of the inner member 20. In some embodiments, the shaft 50 is press fit into the bore 28. However, in some embodiments, the cylindrical exterior surface 52 of the shaft 50 axially and/or rotationally slidingly engages the concave interior surface 29.

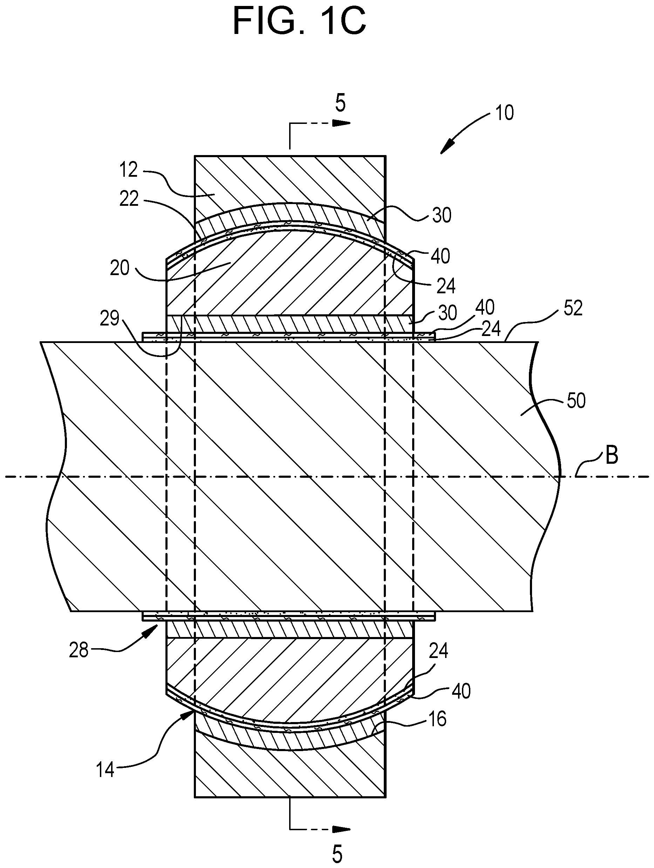

As shown in FIG. 1C, the inner member 20 has a cylindrical bore 28 extending axially therethrough and concentric with a longitudinal axis B of the self-lubricating bearing 10. The bore 28 is defined by a concave interior surface 29. A self-lubricating liner 30 is bonded to the concave interior surface 29 of the inner member 20 (similar to that described herein with reference to the self-lubricating bearing 10 illustrated in FIGS. 1A and 1B). In some embodiments, the cylindrical exterior surface 52 of the shaft 50 axially and/or rotationally slidingly engages the self-lubricating liner 30 that is bonded to the concave interior surface 29. In some embodiments, the cylindrical exterior surface 52 of the shaft 50 also has a physical vapor deposition coating 24 (similar to that described herein with reference to the self-lubricating bearing 10 illustrated in FIGS. 1A and 1B). In some embodiments, a lubricant 40 is disposed between the physical vapor deposition coating 24 and the self-lubricating liner 30.

As best shown in FIG. 3A, in some embodiments, the self-lubricating liner 30 is a woven structure 80 embedded with a resin 90 and a plurality of second self-lubricating particles 84. The woven structure 80 includes a fabric that has a plurality of fibers 80A, 80B, 80C, and 80D interwoven with one another and the second self-lubricating particles 84 (e.g., polytetrafluoroethylene (PTFE) fibers, powder or floc) interwoven or dispersed therewith. The plurality of second self-lubricating particles 84 are integral to the fabric or as an additive to the resin 90. The fibers 80A, 80B, 80C, and 80D include those made of a polyester material, a glass material fiberglass, polyethylene terephthalate, nylon, polyester, cotton, a meta-aramid material, polytetrafluoroethylene (PTFE), aromatic polyamide (aramid), a para-aramid synthetic material or combinations thereof. In some embodiments, the resin 90 is a polyester, epoxy, phenolic, urethane, polyimide and/or polyamide material, or other thermoplastic or thermoset polymers.

While the self-lubricating liner 30 is shown and described as having a woven structure 80, the present invention is not limited in this regard as in some embodiments, the self-lubricating liner 30 is a thermally-consolidated, machinable, moldable or non-woven material that has a reinforced polymer matrix composite with the plurality of second self-lubricating particles 84 integral to the non-woven material and/or as an additive to the matrix.

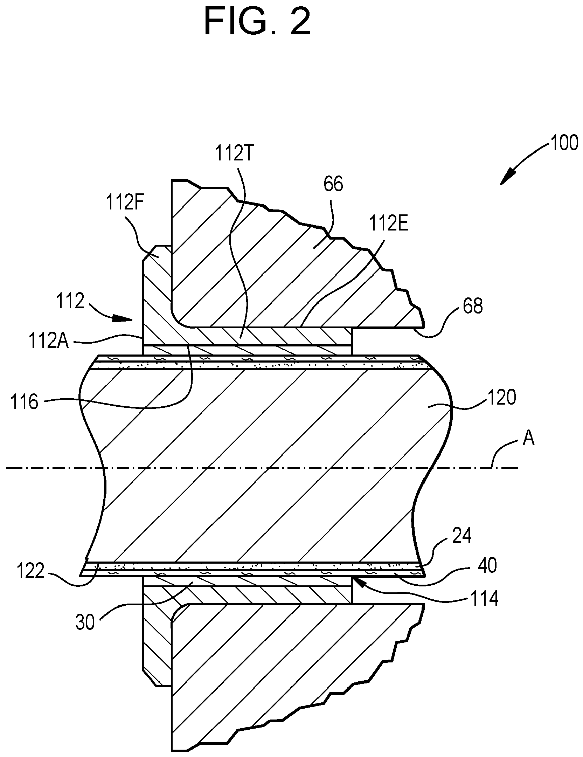

While FIG. 1A illustrates the self-lubricating bearing 10 as being a spherical bearing, the present invention is not limited in this regard, as other types of bearing such as but not limited to journal bearings may be employed. A journal bearing 100 according to an embodiment is shown in FIG. 2. The journal bearing 100 includes a bushing 112 that has a tubular body portion 112T and a flange 112F extending radially outward from an axial end 112A of the tubular body 112T. The tubular body 112T has an exterior surface 112E and a cylindrical inside surface 116 which defines a bore 114 extending axially therethrough and concentric with a longitudinal axis A of the journal bearing 100. The cylindrical inside surface 116 has a self-lubricating liner 30 (similar to that described herein with reference to the self-lubricating bearing 10 illustrated in FIGS. 1A, 1B and 3A) bonded thereto. The bushing 112 is manufactured from a stainless steel (martensitic steel, ferritic steel, precipitation hardened steel, austenitic steel, austenitic-ferritic steel), corrosion-resistant superalloy (e.g., nickel based, cobalt based, iron based), or titanium-based alloy. In some embodiments, the stainless steel is a precipitation hardened stainless steel and is an AMS 5643 17-4PH stainless steel or an AMS 5629 13-8 PH stainless steel.

The bushing 112 is press fit into a cylindrical inside surface 68 of a housing 66. A shaft 120 extends through the bore 114. The shaft 120 has a cylindrical exterior surface 122. In some embodiments, the shaft 120 is manufactured from a stainless steel (e.g., martensitic steel, ferritic steel, precipitation hardened steel, austenitic steel, austenitic-ferritic steel), corrosion-resistant superalloy (e.g., nickel based, cobalt based, iron based), or titanium-based alloy. In some embodiments, the stainless steel is a precipitation hardened stainless steel and is an AMS 5643 17-4PH stainless steel or an AMS 5629 13-8 PH stainless steel. The cylindrical exterior surface 122 has a physical vapor deposition coating 24 thereon (similar to that described herein with reference to the self-lubricating bearing 10 illustrated in FIGS. 1A and 1B).

As shown in FIG. 2, a lubricant 40 (e.g., silicone grease) with a plurality of first self-lubricating particles 44 (see FIG. 3B) dispersed therein is disposed between the self-lubricating liner 30 and the physical vapor deposition coating 24. In some embodiments, the plurality of first self-lubricating particles 44 are made of polytetrafluoroethylene (PTFE) material such as but not limited to a powder, a floc and fibers.

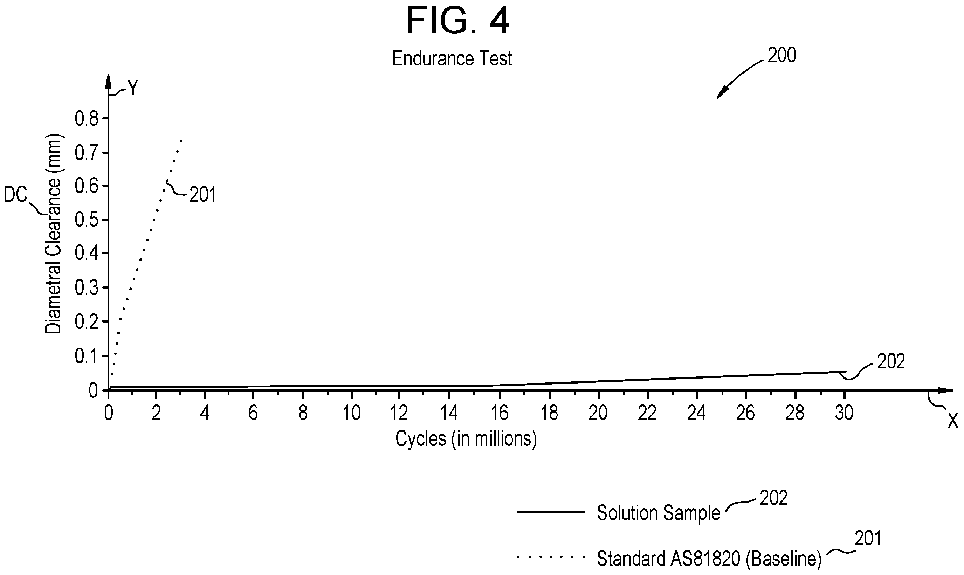

As shown in FIG. 4, a graph 200 of endurance test data has diametral clearance DC (also known by those skilled in the relevant art as radial play) in millimeters on the Y-axis and cycles of operation of the bearing 10 on the X-axis. The diametral clearance DC plotted on the graph 200 for plot 202 is equal to two times the clearance D between the self-lubricating liner 30 and the physical vapor deposition coating 24 as shown in FIG. 5A. The diametral clearance DC plotted on the graph 200 for plot 201 for the prior art bearing is equal to two times the clearance D between the inner member and the outer ring thereof. The prior art bearing employed in the endurance test had no physical vapor deposition coating on the inner member. The cycles of operation in the endurance test continuously tested the bearing in a dithering phase (which simulates an airplane in cruise mode) which included a unidirectional load (i.e., 10MPa) and ±2° movement. The prior art bearing and the spherical self-lubricating bearing 10 according to an embodiment of the present invention were tested under the same conditions.

The plot 201 is of diametral clearance DC versus cycles for a prior art baseline bearing. The plot 201 illustrates that the prior art bearing has a diametral clearance DC of about 0.5 mm after about 2,000,000 cycles, which exceeds operational wear limits.

Plots 202 is the test data for the spherical self-lubricating bearing 10 according to an embodiment of the present invention with a chromium nitride physical vapor deposition coating 24 on the inner member 20 and with the silicone grease lubricant 40, with the plurality of first self-lubricating particles 44 dispersed therein, disposed between the self-lubricating liner 30 and the physical vapor deposition coating 24. As shown in plot 202, the self-lubricating bearing 10 has a diametral clearance between the self-lubricating liner 30 and the physical vapor deposition coating 24 of less than 0.1 mm after 30,000,000 cycles of operation. While the endurance tests were performed for the spherical self-lubricating bearing 10 of the present invention, the test results are also applicable to the journal type self-lubricating bearing 100 illustrated in FIG. 2.

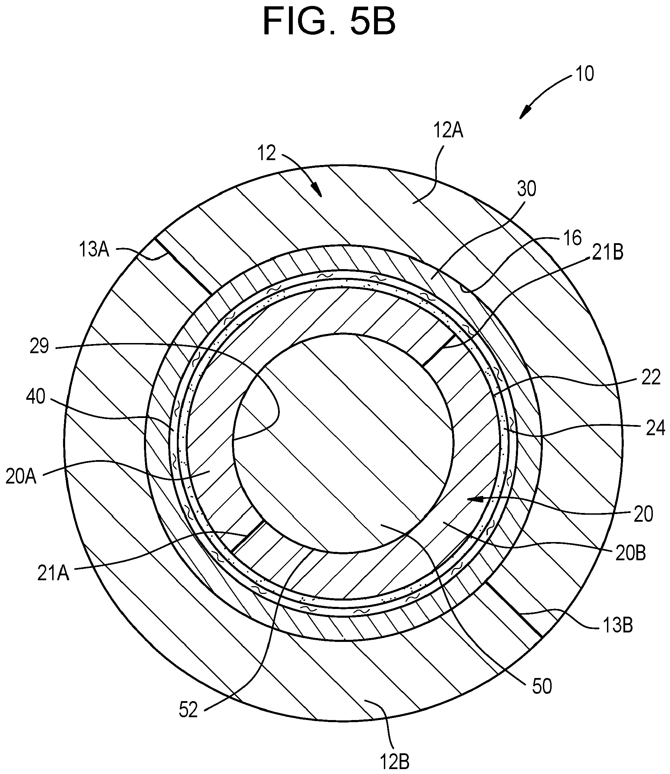

In some embodiments, the inner member 20 has a split configuration in which the inner member 20 has one or more axial splits therein. For example, in the embodiment shown in FIG. 5B, the inner member 20 has a two-piece split configuration with two axial splits 21A and 21B creating a first inner member segment 20A and a second inner member segment 20B that are abutted against one another at the axial splits 21A and 21B. The two-piece split configuration with the two axial splits 21A and 21B creating the first inner member segment 20A and the second inner member segment 20B allows the inner member 20 to be assembled in the outer ring 12. While the inner member 20 is shown and described as having the two inner member segments 20A and 20B with the two axial splits 21A and 21B, the present invention is not limited in this regard as the inner member 20 may have one segment and one axial split or more than two segments and more than two axial splits.

In some embodiments, the outer ring 12 has a split configuration in which the outer ring 12 has one or more axial splits therein. For example, in the embodiment shown in FIG. 5B, the outer ring 12 has a two-piece split configuration with two axial splits 13A and 13B creating a first outer ring segment 12A and a second outer ring segment 12B that are abutted against one another at the axial splits 13A and 13B. The two-piece split configuration with the two axial splits 13A and 13B creating the first outer ring segment 12A and the second outer ring segment 12B allows the outer ring 12 to be assembled on the inner member 20. While the outer ring 12 is shown and described as having the two outer ring segments 12A and 12B with the two axial splits 13A and 13B, the present invention is not limited in this regard as the outer ring 12 may have one segment and one axial split or more than two segments and more than two axial splits.

Although this invention has been shown and described with respect to the detailed embodiments thereof, it will be understood by those of skill in the art that various changes may be made and equivalents may be substituted for elements thereof without departing from the scope of the invention. In addition, modifications may be made to adapt a particular situation or material to the teachings of the invention without departing from the essential scope thereof. Therefore, it is intended that the invention not be limited to the particular embodiments disclosed in the above detailed description, but that the invention will include all embodiments falling within the scope of the appended claims.

## Claims

1. A self-lubricating bearing (10, 100), comprising:
an outer ring (12) having a concave inside surface (16) defining an interior area (14) of the outer ring (12);
an inner member (20) having a convex exterior surface (22), the inner member (20) being disposed at least partially in the interior area (14), the convex exterior surface (22) having a physical vapor deposition coating (24) thereon; and
a self-lubricating liner (30) bonded to the concave inside surface (16),
wherein the outer ring (12) comprises a first metallic alloy, and the inner member (20) comprises a second metallic alloy.

2. The self-lubricating bearing (10, 100) of claim 1, wherein a chemical composition of the first metallic alloy and a chemical composition of the second metallic alloy are the same.

3. The self-lubricating bearing (10, 100) of claim 2, wherein the chemical composition comprises a precipitation hardened stainless steel.

4. The self-lubricating bearing (10, 100) of claim 2, wherein the chemical composition comprises a martensitic stainless steel.

5. The self-lubricating bearing (10, 100) of claim 1, wherein a chemical composition of the first metallic alloy comprises a precipitation hardened stainless steel, and a chemical composition of the second metallic alloy comprises a martensitic stainless steel.

6. The self-lubricating bearing (10, 100) of claim 3 or 5, wherein the precipitation hardened stainless steel comprises an AMS 5643 17-4PH stainless steel, an AMS 5629 13-8 PH stainless steel, or an AMS 5643 17-4PH stainless steel heat treated per 17-4PH HI 150.

7. The self-lubricating bearing (10, 100) of claim 4 or 5, wherein the martensitic stainless steel comprises a 440C stainless steel, an AMS 5630, AMS 5880, or AMS 5618 stainless steel, or the martensitic stainless steel is heat treated to HRc 55 to 62.

8. The self-lubricating bearing (100) of claim 1, further comprising a lubricant (40) disposed between the self-lubricating liner (30) and the physical vapor deposition coating (24), wherein the lubricant (40) comprises a silicone grease with a plurality of first self-lubricating particles (44) dispersed therein, and wherein the plurality of first self-lubricating particles (44) preferably comprises polytetrafluoroethylene, that preferably comprises at least one of a powder, a floc and fibers..

9. The self-lubricating bearing (10, 100) of claim 8, wherein the self-lubricating liner (30) comprises a woven material with a thermosetting resin (90) embedded therein and a plurality of second self-lubricating particles (84) dispersed in the resin (90), wherein the resin (90) preferably comprises polyester, epoxy, phenolic, urethane, polyimide, thermoplastic polymers or a thermoset polymer, and wherein the woven material preferably comprises a fabric comprising at least one of fiberglass, polyethylene terephthalate, polyester, nylon, cotton, meta-aramid material, polytetrafluoroethylene and aromatic polyamide fibers.

10. The self-lubricating bearing (10, 100) of claim 8, wherein the self-lubricating liner (30) comprises a thermally-consolidated, machinable, moldable non-woven material, and wherein the non-woven material preferably comprises a plurality of second self-lubricating particles (84) integral to the non-woven material or as an additive to a resin (90).

11. The self-lubricating bearing (10, 100) of claim 1, further comprising one or many of:
- the self-lubricating bearing (10, 100) is a spherical bearing or a journal bearing;
- the outer ring (12) has at least one axial split (13A, 13B) therein;
- the inner member (20) has at least one axial split (21A, 21B) therein, and
- the self-lubricating bearing (10, 100) has a diametral clearance (DC) between the inner member and the physical vapor deposition coating of less than 0.1 mm after 30,000,000 cycles of operation.

12. The self-lubricating bearing (100) of claim 1, wherein
the inner member (20) has a cylindrical bore (28) extending axially therethrough, the bore (28) being defined by a concave interior surface (29) having another self-lubricating liner (30) adhered thereto,
the self-lubricating bearing (100) further comprises a shaft (50) extending through the bore (28), and another physical vapor deposition coating (24) on a cylindrical exterior surface (52) of the shaft (50), the shaft (50) being in sliding relation to the inner member (20).

13. The self-lubricating bearing (100) of claim 1 or 12, further comprising a lubricant (40) disposed between the self-lubricating liner (30) and the physical vapor deposition coating (24) or between the other self-lubricating liner (30) and the other physical vapor deposition coating (24), respectively.

14. The self-lubricating bearing (100) of claim 1 or 12, wherein the physical vapor deposition coating (24) or the other physical vapor deposition coating (24) comprises chromium nitride, titanium nitride, tungsten carbide or zirconium nitride, respectively.

15. The self-lubricating bearing (100) of claim 1 or 12, wherein the physical vapor deposition coating (24) or the other physical vapor deposition coating (24) is coated on the cylindrical exterior surface (52) via at least one of cathode arc evaporation, magnetron sputter, electron beam evaporation, ion beam sputter, and laser ablation, respectively.
